# EUROPEAN PATENT APPLICATION

(11) **EP 2 782 158 A1**
(43) Date of publication of application: **24.09.2014**
(21) Application number: 13179977.7
(22) Date of filing: 09.08.2013
(51) Int. Cl.: H01M 2/02, H01M 10/42

(54) **Battery pack with antenna**

(30) Priority: 20.03.2013 KR 20130030007
(71) Applicant: Samsung SDI Co., Ltd., Gyeonggi-do (KR)
(72) Inventor: Hwang, Yusik, Gyeonggi-do (KR)
(74) Representative: Taor, Simon Edward William

(57) **Abstract**

Provided is a battery pack including a battery cell; a ferrite layer at a side surface of the battery cell; a film antenna at a side surface of the ferrite layer; and a reinforcement layer between the battery cell and the ferrite layer.

## Description

Aspects of the present invention relate to a battery pack with an antenna.

In recent years, mobile communication terminals are generally equipped with an antenna to perform a near field communication (NFC) function. The NFC function has enabled the mobile communication terminal to be used as a transportation card for subways, buses, taxes, and so on, or payment means for various electronic transactions.

In general, an antenna may be attached to a battery pack of a terminal or a terminal case. As an example, in a case where an antenna is attached to a battery pack, the antenna is attached to a battery cell using an adhesive layer and then wrapped with a label.

However, with the passage of time, the antenna may become deformed from its original form due to a reduction in the adhesion of the adhesive layer and/or the label. The deformation of the antenna may increase frequency deviation of transmitted and received signals. Thus, the NFC function of a mobile communication terminal adopting the antenna may be degraded, disabling the mobile communication terminal to be used for payment of transportation fares or electronic transactions.

Embodiments of the present invention provide a battery pack with an antenna, which can maintain an excellent NFC function even at a reduction in the adhesion of an adhesive layer or a label.

Other embodiments of the present invention provide a battery pack with an antenna, which has a small frequency deviation of transmitted and received signals.

In accordance with one embodiment of the present invention, there is provided a battery pack including a battery cell; a ferrite layer at a side surface of the battery cell; a film antenna at a side surface of the ferrite layer; and a reinforcement layer between the battery cell and the ferrite layer.
The reinforcement layer may include copper, aluminum, or stainless steel.

The reinforcement layer may be adhered to the ferrite layer through an adhesive layer.

The reinforcement layer may be directly formed on the ferrite layer by plating, coating, sputtering, or vacuum depositing.

The reinforcement layer may have a thickness in a range of 0.1µm to 2.0 µm.

The reinforcement layer may include two layers, and an adhesive layer is between the two layers.

The battery pack may further include an adhesive layer between the battery cell and the reinforcement layer.

The battery cell may further include a recessed portion configured to receive the reinforcement layer.

The reinforcement layer may have a planar shape or include a planar mesh network.

The reinforcement layer may include a plurality of segments.

Transmitted and received signals of the film antenna may have frequencies in a range of 16 MHz to 22 MHz.

Transmitted and received signals of the film antenna may have frequencies in a range of 16.6 MHz to 17.2 MHz.

The battery pack may further include a label wrapping the film antenna.

The label may be directly adhered to the film antenna.

The label may be separated from the film antenna.

The battery cell may include a prismatic battery or a pouch-type battery.

As described above, in the battery with an antenna according to the embodiment of the present invention, a reinforcement layer may be between a film antenna and a battery cell. Thus, even if the adhesion of an adhesive layer or a label is reduced, external deformation of the film antenna can be prevented, thereby providing the battery with an antenna capable of maintaining an excellent NFC function.

In addition, because a reinforcement layer is further formed between a film antenna and a battery cell, a frequency deviation of transmitted and received signals may be reduced.

According to an aspect of the invention, there is provided a battery pack as set out in claim 1. Preferred features of this aspect are set out in claims 2 to 15.

Additional aspects of the invention will be set forth in part in the description which follows and, in part, will be obvious from the description, or may be learned by practice of the invention.

The features, and aspects of the embodiments of the present invention will be more apparent from the following detailed description in conjunction with the accompanying drawings, in which:
FIG. 1 is a perspective view of a battery pack with an antenna according to an embodiment of the present invention;
FIG. 2 is an exploded perspective view of the battery pack shown in FIG. 1;
FIG. 3 is a perspective view of a protective circuit module in the battery pack shown in FIG. 1;
FIG. 4 is a perspective view illustrating a state in which an antenna of the battery pack shown in FIG. 1 is attached to one side of a battery cell;
FIG. 5A is a partially cross-sectional view illustrating an antenna of the battery pack shown in FIG. 1 and a structure around the antenna, and FIG. 5B is an enlarged cross-sectional view of a portion of FIG. 5A;
FIGS. 6 to 8 are enlarged cross-sectional views illustrating an antenna of a battery pack according to other embodiments of the present invention and a structure around the antenna;
FIG. 9 is a perspective view illustrating a partial configuration of a battery pack with an antenna according to still another embodiment of the present invention;
FIG. 10 is a perspective view illustrating a partial configuration of a battery pack with an antenna according to still another embodiment of the present invention;
FIGS. 11 and 12 are plan views illustrating exemplary reinforcement layers in the battery pack shown in FIG. 10;
FIGS. 13A and 13B are schematic cross-sectional views illustrating time caused changes in the conventional antenna and an antenna according to the present invention; and
FIGS. 14A and 14B are graphs illustrating frequency deviations of transmitted and received signals depending on time caused changes in the conventional antenna module and an antenna module according to the present invention.

Hereinafter, an exemplary embodiment of the invention will be described in detail with reference to the accompanying drawings such that they can easily be made and used by those skilled in the art.

Aspects and features of the present invention and methods of accomplishing the same may be understood more readily by reference to the following detailed description of example embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will be defined by the appended claims and their equivalents.

In the drawings, the thickness of layers and regions are exaggerated for clarity. Like numbers refer to like elements throughout. As used herein, the term "and/or" includes any and all combinations of one or more of the associated listed items.

In addition, the terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, components, and/or groups, but do not preclude the presence or addition of one or more other features, integers, steps, operations, elements, components, and/or groups thereof.

It will be understood that, although the terms first, second, etc. may be used herein to describe various members, elements, regions, layers and/or sections, these elements members, elements, regions, layers and/or sections should not be limited by these terms. These terms are only used to distinguish one element, member, region, layer and/or section from another element, member, region, layer and/or section. Thus, for example, a first member, a first element, a first region, a first layer and/or a first section discussed below could be termed a second member, a second element, a second region, a second layer and/or a second section without departing from the teachings of the present invention.

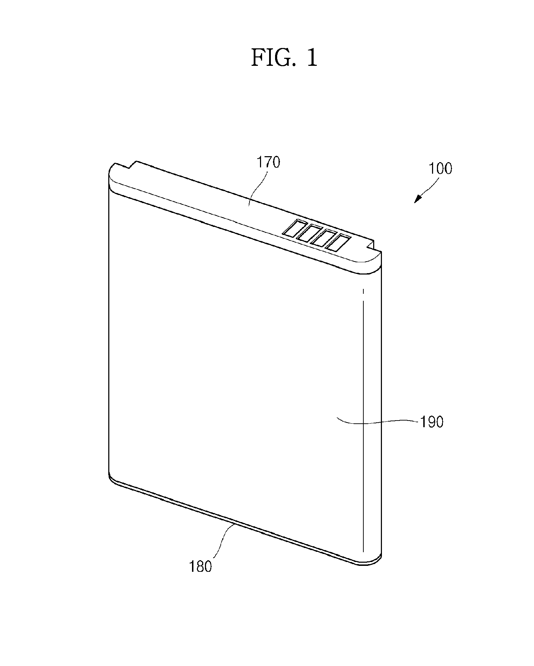

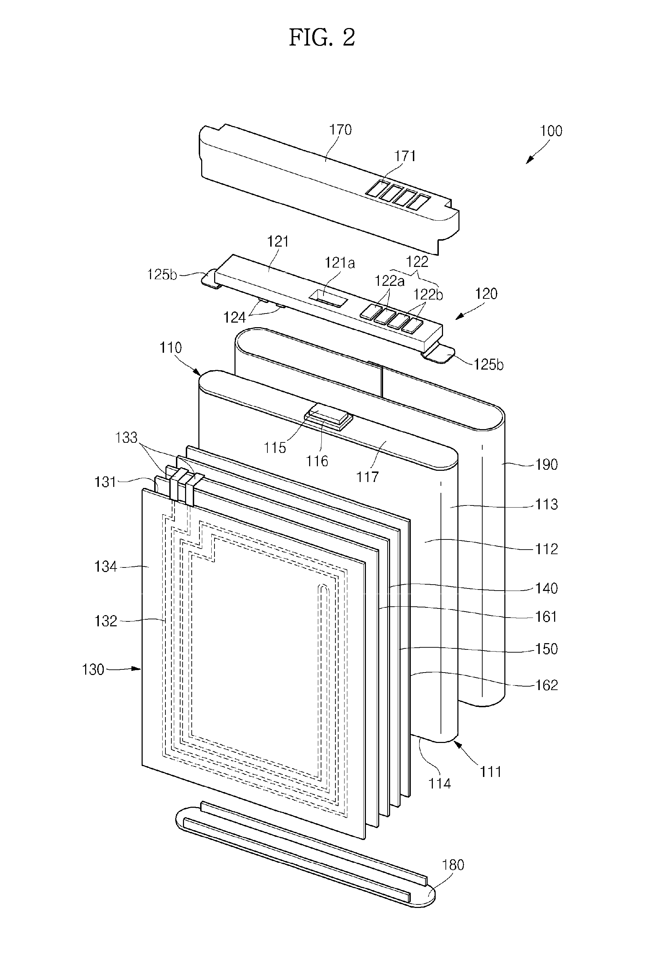

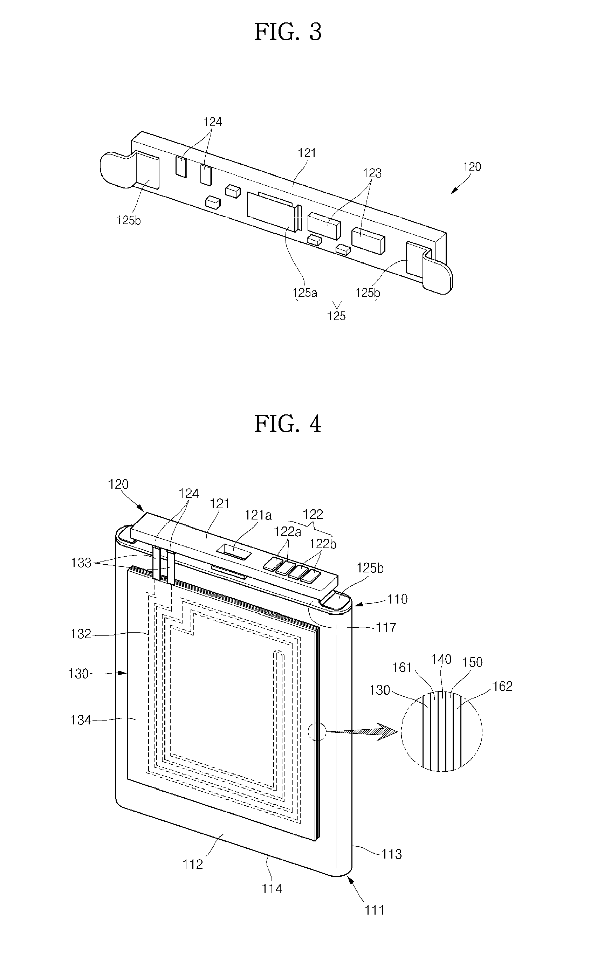

FIG. 1 is a perspective view of a battery pack with an antenna according to an embodiment of the present invention, FIG. 2 is an exploded perspective view of the battery pack shown in FIG. 1, and FIG. 3 is a perspective view of a protective circuit module in the battery pack shown in FIG. 1.

As shown in FIGS. 1 and 2, the battery pack 100 according to the embodiment of the present invention includes a battery cell 110, a protective circuit module 120, a film antenna 130, a ferrite layer 140, a reinforcement layer 150, adhesive layers 161 and 162, an upper cover 170, a lower cover 180 and a label 190. Here, because the ferrite layer 140 has relatively high magnetic permeability, it can improve frequency sensitivity of transmitted and received signals of the film antenna 130, thereby maintaining an excellent NFC function. In addition, the reinforcement layer 150 prevents or substantially prevents the NFC function from being lowered even with a reduction in the adhesion of the adhesive layer 162 or the label 190, and can reduce a frequency deviation of the transmitted and received signals of the film antenna 130.

The battery cell 110 includes a prismatic can or housing 111, an electrode assembly (not shown), an electrode terminal 115, an insulation gasket 116, and a cap plate 117. The electrode assembly is received (e.g., enclosed or housed) in the housing 111 and inserted through an opening (not shown) formed at one side of the housing 111, and the opening is sealed with the cap plate 117. The battery cell 110 has electrically positive and negative electrodes, and is a battery pack unit for performing charging and discharging. Here, the housing 111 may also be defined as a prismatic case.

The housing 111 may have a roughly rectangular parallelepiped shape having a hollow internal space. That is to say, the housing 111 includes two long side surfaces 112, which are relatively wide, two short side surfaces 113, which couple the long side surfaces 112 and are relatively narrow, and a bottom surface 114 coupling the two long side surfaces 112 and the two short side surfaces 113. Here, the opening is formed to be opposite to the short side surfaces 113. The two short side surfaces 113 may be curved. The housing 111 may be made of at least one material selected from the group consisting of aluminum, an aluminum alloy, iron, an iron alloy, stainless steel and equivalents thereof, but aspects of the present invention are not limited thereto. In addition, the housing 111 itself may serve as an electrode terminal (for example, a positive electrode terminal).

The electrode assembly may include a positive electrode plate, a negative electrode plate and a separator. The separator is positioned between the positive electrode plate and the negative electrode plate, and the electrode assembly may be wholly wound in a jelly-roll configuration. The electrode assembly may be inserted into the housing 111 through the opening of the housing 111. The electrode assembly and an electrolytic solution are received (e.g., housed or enclosed) in the housing 111.

The electrode terminal 115 is surrounded by the insulation gasket 116 and is upwardly protruded and/or exposed while passing through the cap plate 117. In addition, the electrode terminal 115 may be electrically coupled to, for example, the negative electrode plate, and the cap plate 117 may be electrically coupled to, for example, the positive electrode plate. Therefore, the electrode terminal 115 may become a negative electrode, and the cap plate 117 and the housing 111 may become a positive electrode.

As described above, the cap plate 117 seals or substantially seals the opening of the housing 111, thereby preventing or substantially preventing the electrode assembly and the electrolytic solution received in the housing 111 from being dislodged and/or leaked. To this end, the cap plate 117 may be laser-welded or otherwise coupled or secured to a top end of the housing 111.

As shown in FIGS. 2 and 3, the protective circuit module 120 is positioned on the battery cell 110 to be electrically coupled to the battery cell 110. In this regard, the protective circuit module 120 includes a circuit board 121 having a through-hole 121a, an external terminal 122, a plurality of protective circuit elements 123, an antenna connection terminal 124 and an internal terminal 125.

The circuit board 121 may generally be a rigid printed circuit board or a flexible printed circuit board. The through-hole 121a, into which a welding tool is inserted, is formed at a roughly central area of the circuit board 121 to allow the internal terminal 125 to be electrically coupled to the electrode terminal 115 of the battery cell 110. The external terminal 122 is formed roughly on a top surface of the circuit board 121 and may be electrically coupled to and/or disconnected from an external device. In more detail, the external terminal 122 includes a first external terminal 122a electrically coupled to the external device to charge or discharge the battery cell 110, and a second external terminal 122b electrically coupled to the external device to transmit or receive an electrical signal having a predetermined frequency. The plurality of protective circuit elements 123 are mounted on a bottom surface of the circuit board 121 to sense the voltage, current, temperature, etc., of the battery cell 110 and to protect or substantially protect the battery cell 110 from being in an overcharged voltage state, an over-discharged voltage state or an overcurrent state. The antenna connection terminal 124 is formed roughly on the bottom surface of the circuit board 121 to be electrically coupled to an antenna terminal 133 of the film antenna 130. In addition, the antenna connection terminal 124 may be electrically coupled to the second external terminal 122b via a wiring pattern (not shown).

Therefore, the electrical signal having a predetermined frequency transmitted or received by the film antenna 130 may be processed by the external device electrically coupled to the second external terminal 122b (for example, a mobile communication terminal, a smart phone, etc.). The internal terminal 125, mounted roughly on the bottom surface of the circuit board 121, is electrically coupled to the electrode terminal 115 or the cap plate 117 of the battery cell 110. To this end, the internal terminal 125 may be divided into a first internal terminal 125a and two second internal terminals 125b. The first internal terminal 125a may be electrically coupled to the electrode terminal 115 of the battery cell 110, and the two second internal terminals 125b may be electrically coupled to the cap plate 117 of the battery cell 110.

Here, the antenna connection terminal 124 may not be electrically coupled to the second external terminal 122b. That is to say, the circuit board 121 may have a circuit element (not shown) mounted thereon, the circuit element capable of directly processing a transmitted or received signal having a predetermined frequency. In this case, the antenna connection terminal 124 is not electrically coupled to the second external terminal 122b but is electrically coupled to the circuit element.

The film antenna 130 may be positioned on one of the two long side surfaces 112 of the battery cell 110. In this case, two film antennas 130 may be provided on the two long side surfaces 112 of the battery cell 110, respectively. The film antenna 130 may be shaped of a substantially rectangular flat panel so as to correspond to shapes of the two long side surfaces 112 of the battery cell 110, and may include an insulation layer 131, an antenna pattern 132, an antenna terminal 133 and a protection layer 134. The loop-shaped antenna pattern 132 is basically formed on a surface of the insulation layer 131 and is covered by the protection layer 134 to be protected. The antenna terminal 133, coupled to the antenna pattern 132, extends and protrudes a predetermined length to the exterior sides of the insulation layer 131 and the protection layer 134. Here, the insulation layer 131 may be made of polyimide (PI) or polyethylene terephthalate (PET), the antenna pattern 132 and the antenna terminal 133 may be made of copper or nickel, and the protection layer 134 may be made of a photo-imageable solder resist (PSR), but aspects of the present invention are not limited thereto. In addition, the antenna terminal 133 is electrically coupled to the antenna pattern 132 and outwardly protrudes and extends to then be exposed to the outside. The antenna terminal 133 is electrically coupled to the antenna connection terminal 124 provided in the protective circuit module 120. In addition, the film antenna 130 may be positioned one of the two short side surfaces 113 of the battery cell 110. Further, the film antenna 130 may be positioned on both of the long side surface 112 and the short side surface 113.

The ferrite layer 140 may be positioned between the battery cell 110 and the film antenna 130 and may be shaped of a substantially rectangular flat panel. The ferrite layer 140 may reduce eddy current generated in the film antenna 130 and may focus magnetic flux passing through the film antenna 130, thereby improving the frequency sensitivity of the transmitted or received signal.

The ferrite layer 140 may be made of a sintered ferrite metal. That is to say, the ferrite layer 140 may be made of one selected from the group consisting of nickel ferrite, zinc ferrite, nickel zinc ferrite, barium ferrite and equivalents thereof. When the ferrite layer 140 is made of nickel zinc ferrite, it may include 47 wt% to 48 wt% of iron oxide, 30 wt% of nickel oxide, 20 wt% of zinc oxide, and 2 wt% to 3 wt% of copper oxide.

The ferrite layer 140 has a thickness in a range of approximately 5 µm to 30 µm. If the thickness of the ferrite layer 140 is smaller than approximately 5 µm, it may be liable to break even by small shocks. If the thickness of the ferrite layer 140 is greater than approximately 30 µm, the battery pack 100 may become bulky, resulting in a reduction in the capacity of density of the battery pack 100 relative to the capacity of the battery cell 110.

The reinforcement layer 150 is positioned between the battery cell 110 and the ferrite layer 140 and may be shaped of a substantially rectangular flat panel. Even if adhesion between the adhesive layers 161 and 162 and the label 190, which will later be described, is reduced, the reinforcement layer 150 can prevent external deformation of the film antenna 130 and the ferrite layer 140, thereby preventing the NFC function from being lowered. In addition, the reinforcement layer 150 may further reduce the frequency deviation of transmitted and received signals of the film antenna 130, compared to a case of the conventional art.

The reinforcement layer 150 may include at least one selected from the group consisting of copper, aluminum, stainless steel and equivalents thereof, but the present invention does not limit the material of the reinforcement layer 150 to those listed herein.

In addition, the reinforcement layer 150 may have a thickness in a range of approximately 0.1 µm to 2.0 µm. If the thickness of the reinforcement layer 150 is smaller than approximately 0.1 µm, it is difficult to prevent external deformation of the film antenna 130 and the ferrite layer 140 due to a time caused change of the battery pack 100. If the thickness of the reinforcement layer 150 is greater than approximately than approximately 2.0 µm, the external deformation of the film antenna 130 and the ferrite layer 140 due to the time caused change of the battery pack 100 can be sufficiently prevented. In this case, however, the overall thickness of the battery pack 100 may increase.

The adhesive layers 161 and 162 may include a first adhesive layer 161 and a second adhesive layer 162. The first adhesive layer 161 is provided between the ferrite layer 140 and the film antenna 130 and couples the ferrite layer 140 and the film antenna 130 to each other. In addition, the second adhesive layer 162 is provided between the battery cell 110 and the reinforcement layer 150 and couples the battery cell 110 and the reinforcement layer 150 to each other. Here, the first adhesive layer 161 and the second adhesive layer 162 may be at least one selected from the group consisting of a double-sided adhesive tape, a liquid-type adhesive, and equivalents thereof, but the present invention does not limit the materials of the first adhesive layer 161 and the second adhesive layer 162 to those listed herein.

The upper cover 170 and the lower cover 180 may cover the protective circuit module 120 and a lower portion of the battery cell 110. That is to say, the upper cover 170 covers the protective circuit module 120 and an upper portion of the battery cell 110. Here, the upper cover 170 has a plurality of openings 171 formed therein, thereby allowing a plurality of external terminals 122 formed in the protective circuit module 120 to be exposed to the outside. The upper cover 170 and the lower cover 180 may be generally formed using a plastic resin in advance and then coupled to the protective circuit module 120 corresponding to the upper region of the battery cell 110 and the lower portion of the battery cell 110 in an interference fit manner. In addition, the upper cover 170 and the lower cover 180 may also be formed by mounting the protective circuit module 120 and the battery cell 110 in a mold, injecting melted plastic resin into the mold and cooling the resultant product.

The label 190 wraps some portions of the upper cover 170 and the lower cover 180 while wrapping the entire long side surfaces 112 and the entire short side surfaces 113 of the battery cell 110. In particular, the label 190 covers the film antenna 130, thereby protecting the film antenna 130 from external shocks. The upper cover 170, the lower cover 180 and the label 190 may protect the battery cell 110, the protective circuit module 120, the film antenna 130, the ferrite layer 140 and the reinforcement layer 150 from external shocks. Here, a product name, a trade mark, product details, a dimension or volume of the product, production date, production, marketing and use methods, and so on, may be described on the external surface of the label 190, and an adhesive layer may be formed on the internal surface of the label 190. In addition, the label 190 has the adhesive layer formed on its one surface, and may be a surface-treated polypropylene film, a surface-treated polyester film, and so on, but not limited thereto.

Instead of the label 190, a hard type external case, made of a rigid plastic material, may be used. In this case, the film antenna 130, the ferrite layer 140 and the reinforcement layer 150 may be pre-formed on the internal surface of the external case to then be coupled to the battery cell 110.

Here, adhesion of the second adhesive layer 162 is reduced more rapidly than adhesion of the first adhesive layer 161 due to the time caused change. That is to say, the first adhesive layer 161 adheres the film antenna 130 of a thin film type to the ferrite layer 140 of a thin film type, while the second adhesive layer 162 adheres the battery cell 110 of a bulk type, which may undergo a considerable change in temperature, to the reinforcement layer 150 of a thin film type. Therefore, because the adhesion of the second adhesive layer 162 is reduced more rapidly than the adhesion of the first adhesive layer 161 due to the time caused change, the thin film type reinforcement layer 150 can be separated from the bulk type battery cell 110. In addition, because the label 190 is frequently exposed to external surroundings, adhesion of the label 190 may also be relatively rapidly reduced due to the time caused change.

The aforementioned battery pack 100 according to the embodiment of the present invention further includes the reinforcement layer 150 made of a metal between the sintered ferrite layer 140 and the battery cell 110, thereby preventing external deformation of the film antenna 130 even if the adhesion of the second adhesive layer 162 or the label 190 is reduced, ultimately providing the battery pack 1000 capable of maintaining an excellent NFC function. In addition, the battery pack 100 according to the embodiment of the present invention further includes the reinforcement layer 150 between the film antenna 130 and the battery cell 110, thereby providing the battery pack 100 having a further reduced frequency deviation of transmitted/received signals, compared to a case of the conventional battery pack, as confirmed by experimentation.

FIG. 4 is a perspective view illustrating a state in which an antenna of the battery pack shown in FIG. 1 is attached to one side of a battery cell.

As shown in FIG. 4, the film antenna 130 is attached to the ferrite layer 140 through the first adhesive layer 161, and the ferrite layer 140 is adhered to the reinforcement layer 150. The reinforcement layer 150 is adhered to the battery cell 110, that is, the long side surfaces 112 of the housing 111 through the second adhesive layer 162.

In addition, the antenna terminal 133 of the film antenna 130 is electrically coupled to the antenna connection terminal 124 provided in the protective circuit module 120. Here, the antenna terminal 133 and the antenna connection terminal 124 may be coupled to each other by ultrasonic welding, resistance welding or laser welding.

In addition, the protective circuit module 120 and the battery cell 110 are electrically coupled to each other through a first internal terminal (not shown) and a second internal terminal 125b. For example, the first internal terminal may be welded to an electrode terminal of the battery cell 110, and the second internal terminal 125b may be welded to the cap plate 117. As described above, ultrasonic welding, resistance welding, or laser welding may be used in the welding of the first internal terminal and the second internal terminal 125b.

Here, an insulating sheet may further be provided between the antenna terminal 133 and the battery cell 110 (including the cap plate 117) to electrically insulate the antenna terminal 133 and the battery cell 110 from each other.

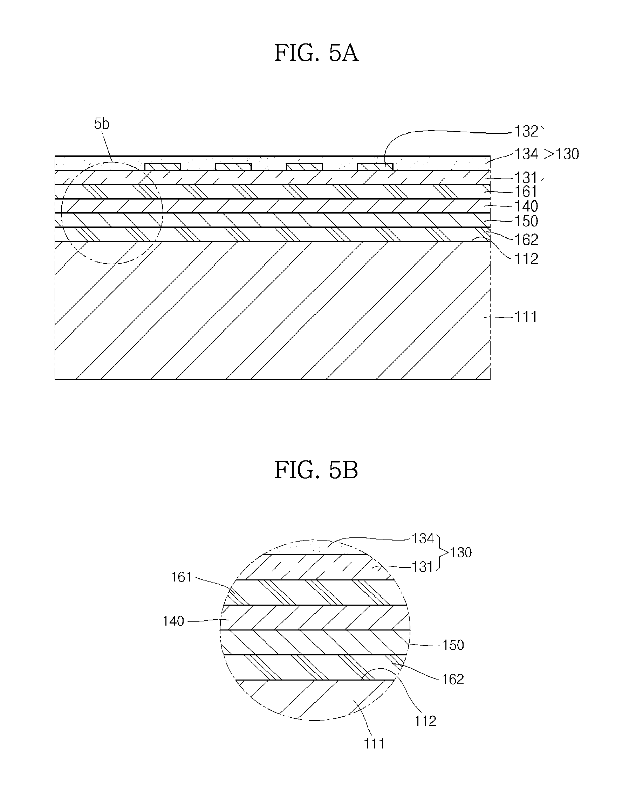

FIG. 5A is a partially cross-sectional view illustrating an antenna of the battery pack shown in FIG. 1 and a structure around the antenna, and FIG. 5B is an enlarged cross-sectional view of FIG. 5A.

As shown in FIGS. 5A and 5B, a film antenna 130 includes an insulation layer 131, an antenna pattern 132 formed on a surface of the insulation layer 131, and a protection layer 134 covering the insulation layer 131 and the antenna pattern 132. In addition, the ferrite layer 140 is adhered to the insulation layer 131 of the film antenna 130 through the first adhesive layer 161, the ferrite layer 140 is adhered to the reinforcement layer 150, and the reinforcement layer 150 is adhered to the battery cell 110 through the second adhesive layer 162.

Here, the reinforcement layer 150 may be directly formed on the bottom surface of the ferrite layer 140 by plating, coating, sputtering, vacuum deposition, or equivalents thereof. Therefore, the ferrite layer 140 and the reinforcement layer 150 are integrally formed, and the reinforcement layer 150 reinforces the brittleness of the ferrite layer 140. Here, the ferrite layer 140 is adhered to the film antenna 130 through the first adhesive layer 161. Thus, the reinforcement layer 150 may reinforce the rigidity of the ferrite layer 140 and the film antenna 130. That is to say, the reinforcement layer 150 prevents external deformation of the ferrite layer 140 and the film antenna 130.

In addition, the overall thickness of the film antenna 130, the first adhesive layer 161, the ferrite layer 140, the reinforcement layer 150 and the second adhesive layer 162 may be in a range of approximately 100 micrometers (µm) to approximately 150 µm, but embodiments of the present invention are not limited thereto.

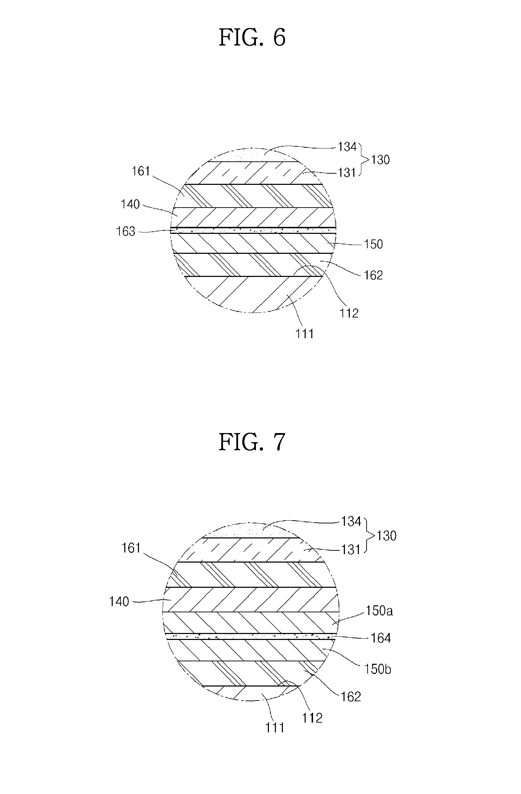

FIGS. 6 to 8 are enlarged cross-sectional views illustrating an antenna of a battery pack according to other embodiments of the present invention and a structure around the antenna.

As shown in FIG. 6, according to the embodiment of the present invention, a reinforcement layer 150 may be directly formed on a second adhesive layer 162 and may be adhered to a ferrite layer 140 through an adhesive layer 163. That is to say, the reinforcement layer 150 is directly formed on a top surface of the second adhesive layer 162 by plating, coating, sputtering, vacuum deposition or equivalents thereof. The reinforcement layer 150 may be adhered to the ferrite layer 140 through the adhesive layer 163.

As shown in FIG. 7, according to an embodiment of the present invention, the reinforcement layer may include a first reinforcement layer 150a and a second reinforcement layer 150b. The first reinforcement layer 150a is directly formed on a ferrite layer 140, and the second reinforcement layer 150b is directly formed on a second adhesive layer 162. An adhesive layer 164 is further provided between the first reinforcement layer 150a and the second reinforcement layer 150b, thereby adhering the first reinforcement layer 150a to the second reinforcement layer 150b.

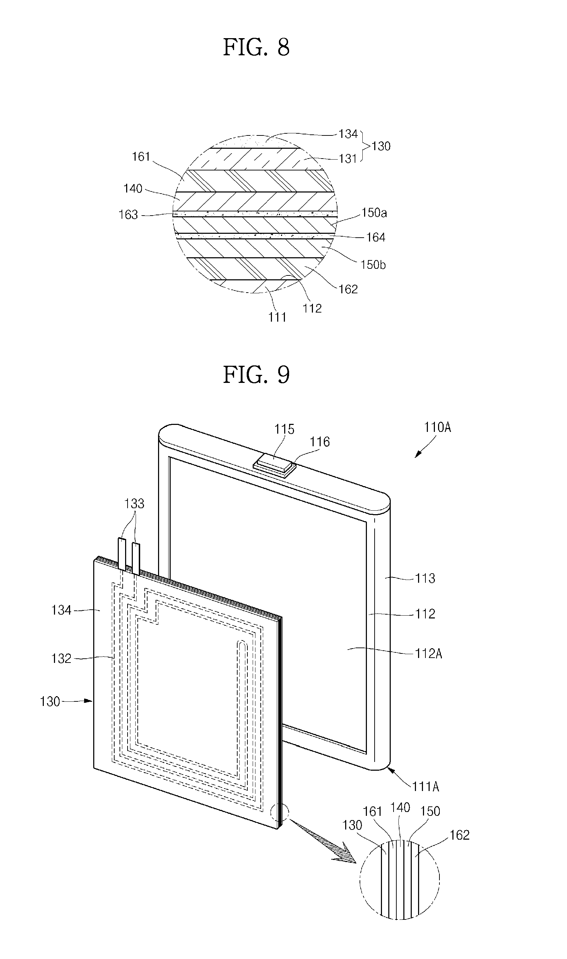

As shown in FIG. 8, according to an embodiment of the present invention, the reinforcement layer may include a first reinforcement layer 150a and a second reinforcement layer 150b. The first reinforcement layer 150a is adhered to the ferrite layer 140 through an adhesive layer 163, and the second reinforcement layer 150b is directly formed on the second adhesive layer 162. An adhesive layer 164 is further provided between the first reinforcement layer 150a and the second reinforcement layer 150b, thereby adhering the first reinforcement layer 150a to the second reinforcement layer 150b.

FIG. 9 is a perspective view illustrating a partial configuration of a battery pack with an antenna according to an embodiment of the present invention.

Referring to FIG. 9, the battery pack according to an embodiment of the present invention includes a battery cell 110A having a groove 112A, a film antenna 130 mounted in the groove 112A of the battery cell 110A, a ferrite layer 140 and a reinforcement layer 150.

The groove 112A may be formed on a long side surface 112 of the battery cell 110A, for example, a long side surface 112 of a housing 111A, to have a shape corresponding to shapes of the film antenna 130, the ferrite layer 140 and the reinforcement layer 150. Only the reinforcement layer 150 may be mounted in the groove 112A, the reinforcement layer 150 and the ferrite layer 140 may be mounted in the groove 112A, or the reinforcement layer 150, the ferrite layer 140 and the film antenna 130 may be mounted in the groove 112A. A first adhesive layer 161 is interposed between the film antenna 130 and the ferrite layer 140, and a second adhesive layer 162 is interposed between the reinforcement layer 150 and the housing 111A.

Therefore, because the reinforcement layer 150 is mounted in the groove 112A of the battery cell 110A, the reinforcement layer 150 and the ferrite layer 140 are mounted in the groove 112A of the battery cell 110A, or the reinforcement layer 150, the ferrite layer 140 and the film antenna 130 are mounted in the groove 112A of the battery cell 110A, a space occupied by these elements can be minimized, thereby maintaining the volume of the battery pack at a small level while not reducing the capacity of the battery cell 110A.

The battery pack according to the present embodiment is substantially the same as the battery pack 100 according to the previous embodiment in view of configurations, functions and effects, except for a configuration of the battery cell 110A, and connection structures of the battery cell 110A and the reinforcement layer 150, and the ferrite layer 140 and/or the film antenna 130, and repeated explanations thereof will be omitted.

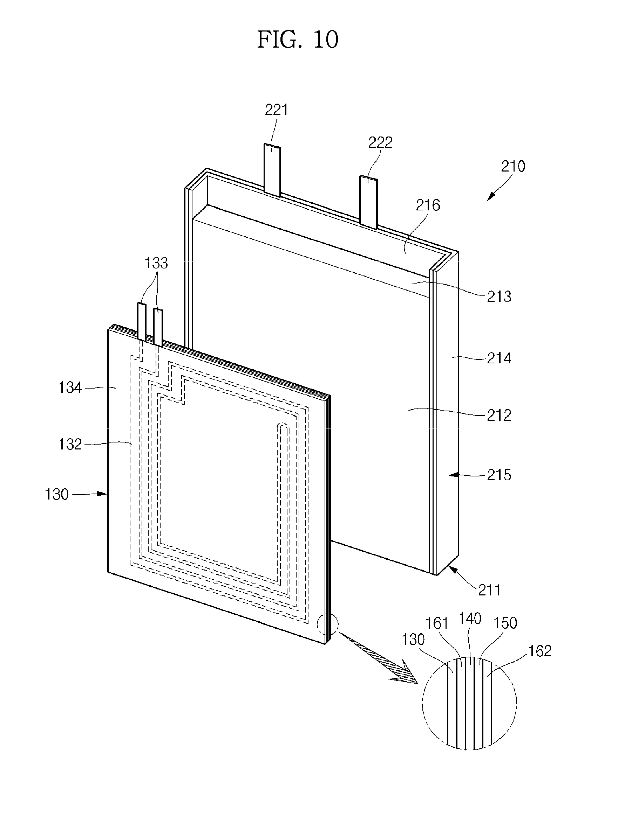

FIG. 10 is a perspective view illustrating a partial configuration of a battery pack with an antenna according to another embodiment of the present invention.

As shown in FIG. 10, in the battery pack according to an embodiment of the present invention, a pouch-type battery 210, instead of the prismatic battery, may also be used as a battery cell. That is to say, the film antenna 130, the ferrite layer 140 and the reinforcement layer 150 having the same configurations as those described above, may be adhered to one side surface of the pouch-type battery 210, a first adhesive layer 161 may be interposed between the film antenna 130 and the ferrite layer 140, and a second adhesive layer 162 may be interposed between the reinforcement layer 150 and the pouch-type battery 210.

Here, the pouch-type battery 210, as generally known in the art, includes an electrode assembly (not shown), a pouch-type external case 211 enclosing the electrode assembly and an electrolytic solution (not shown), and a first electrode tab 221 and a second electrode tab 222 electrically connected to the electrode assembly and extending to the outside of the pouch-type external case 211.

The pouch-type external case 211 includes two long side surfaces 212 formed at opposite regions and relatively wide, and four short side surfaces 213 and 214 connect the long side surfaces 212, formed at opposite regions and relatively narrow. Wing portions 215 folded in one direction are formed on two short side surfaces 214 among the four short side surfaces 213 and 214, and an extending portion 216 outwardly extending on one short side surface 213 among the four short side surfaces 213 and 214 while the first and second electrode tabs 221 and 222 pass through the extending portion 216. Because the pouch-type battery 210 including the pouch-type external case 211 is well known to one skilled in the art, an explanation thereof will not be further given.

In the illustrated embodiment, the film antenna 130, the ferrite layer 140, and the reinforcement layer 150 are adhered to one of the long side surfaces 212 of the pouch-type external case 211, where the extending portion 216 is not formed, but aspects of the present invention are not limited thereto. The film antenna 130, the ferrite layer 140, and the reinforcement layer 150 may be adhered to one of the long side surfaces 212 of the pouch-type external case 211, where the extending portion 216 is formed adjacent the long side surface 212.

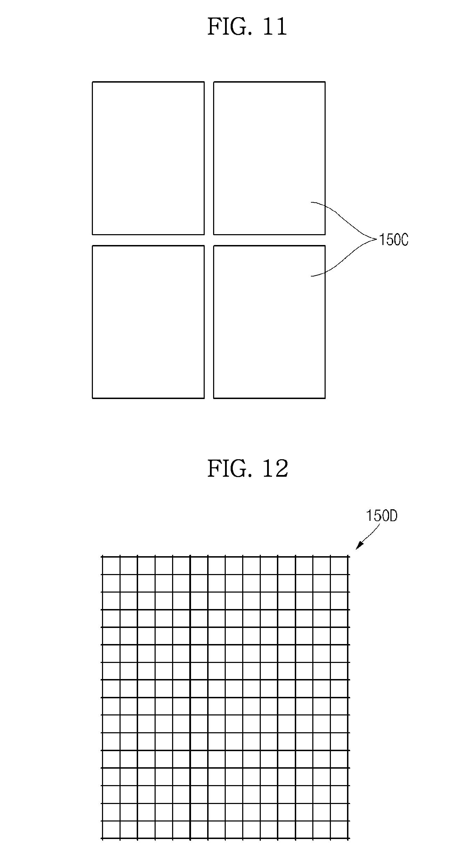

FIGS. 11 and 12 are plan views illustrating exemplary reinforcement layers in the battery pack shown in FIG. 10.

As shown in FIG. 11, in the battery pack according to the embodiment of the present invention, a reinforcement layer 150C may include a plurality of segments. That is to say, the reinforcement layer 150C may include four segments each having the same shape, e.g., a generally rectangular shape, which may be directly formed on or adhered to a ferrite layer. In addition to the generally rectangular shape, the reinforcement layer 150C may have various shapes, such as generally triangular, generally square, generally pentagonal, generally hexagonal and generally circular. However, the present invention does not limit the shape of the reinforcement layer 150C to those listed herein. In addition, the segments of the reinforcement layer 150C may have different areas.

Like the reinforcement layer 150C, the ferrite layer may also include a plurality of segments. That is to say, the ferrite layer may be formed to have the same or similar shape as the reinforcement layer 150C.

Therefore, even if the battery cell 110 swells due to overcharge or an excessive rise in the temperature, it is possible to prevent or substantially prevent the reinforcement layer 150C and the ferrite layer from being damaged. That is to say, the battery cell may experience swelling of a housing due to expansion of internal gases of the housing when the battery cell is overcharged or the temperature of the battery cell excessively rises. As the result of the swelling, central portions of the long side surfaces of the battery cell may generally protrude. If the ferrite layer and the reinforcement layer 150C are formed of a single sheet, the swelling may cause cracks to the ferrite layer and the reinforcement layer 150C or may divide each of the ferrite layer and the reinforcement layer 150C into a plurality of segments having irregular shapes, in view of the center of the battery cell.

Therefore, in the battery pack according to the embodiment of the present invention, in view of long side surfaces of the battery cell, the ferrite layer and the reinforcement layer 150C may be, in advance, divided into the plurality of segments, which are then adhered to the battery cell. Because the ferrite layer and the reinforcement layer 150C are, in advance, divided into the plurality of segments in lengthwise directions of the opposed long side surfaces in view of centers of the long side surfaces of the battery cell, a possibility of generating cracks or ruptures in the ferrite layer and the reinforcement layer 150C may be reduced.

The battery pack according to the present embodiment is substantially the same as the battery pack 100 according to the previous embodiment in view of configurations, functions and effects, except for configurations of the ferrite layer and the reinforcement layer 150C, and repeated explanations thereof will be omitted.

As shown in FIG. 12, in the battery pack according to the embodiment of the present invention, the reinforcement layer 150D may be shaped of a mesh network. That is to say, the reinforcement layer 150D may be formed to have a shape of a mesh network or a net having a plurality of horizontal metal lines and a plurality of vertical metal lines. The mesh network or net shaped reinforcement layer 150D may be directly formed on the ferrite layer or may be adhered to the ferrite layer through an adhesive layer.

As described above, because the battery pack according to the embodiment of the present invention has the reinforcement layer 150D formed in a mesh network shape, the weight of the battery pack is not increased, and the manufacturing cost is reduced due to a reduced amount of materials used.

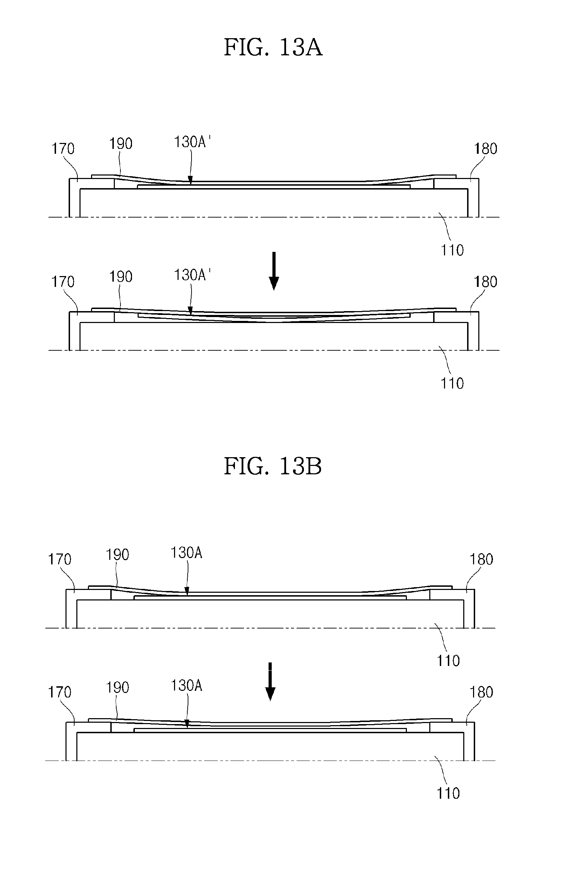

FIGS. 13A and 13B are schematically cross-sectional views illustrating time-caused changes in the conventional antenna and an antenna according to the present invention.

For example, FIG. 13A illustrates a battery pack without a reinforcement layer, and FIG. 13B illustrates a battery pack with a reinforcement layer.

As shown in FIG. 13A, when the battery pack is completed, a ferrite layer and a film antenna (to be defined as an antenna module 130A' herein) are completely or substantially adhered to a battery cell 110 through an adhesive layer, and a label 190 is also are completely or substantially adhered to the antenna module 130A'. However, due to a time-caused change, adhesive properties of the adhesive layer and the label 190 may be reduced such that the label 190 may become separated from the antenna module 130A'. In such a case, the antenna module 130A' may also be bent on the battery cell 110 in a substantially "U" shape or a substantially inverted "U" shape. As described above, if the antenna module 130A' is bent in a substantially "U" shape or a substantially inverted "U" shape, the frequency deviation of transmitted and received signals of the film antenna 130 may increase, which will later be described in further detail. In FIG. 13A, the upper cover 170 is coupled to a roughly top portion of the battery cell 110, and the lower cover 180 is coupled to a roughly bottom portion of the battery cell 110.

As shown in FIG. 13B, even if a label 190 is separated from an antenna module 130A as the adhesion of the adhesive layer or the label 190 is reduced due to a time caused change, the antenna module 130A may not be bent. That is to say, because a reinforcement layer is directly formed on or adhered to a ferrite layer, the reinforcement layer may prevent or substantially prevent warpage of the ferrite layer and the film antenna. Therefore, the frequency deviation of transmitted and received signals of the film antenna may not increase, which will now be described.

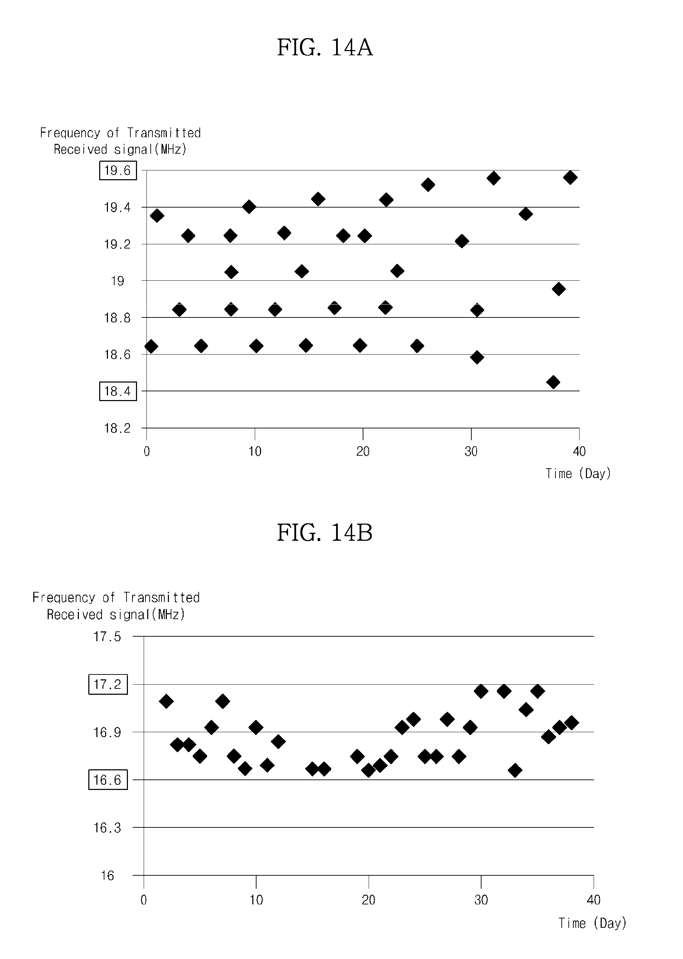

FIGS. 14A and 14B are graphs illustrating frequency deviations of transmitted and received signals depending on time-caused changes in the conventional antenna module and an antenna module according to the present invention.

For example, FIG. 14A illustrates the frequency deviation in the battery pack without a reinforcement layer (see FIG. 13A), and FIG. 14B illustrates the frequency deviation in the battery pack with a reinforcement layer (see FIG. 13B). In FIGS. 14A and 14B, the X-axis indicates a time (day), and the Y-axis indicates frequencies of transmitted and received signals (MHz).

As shown in FIG. 14A, the conventional battery pack without a reinforcement layer basically has a frequency deviation of transmitted and received signals in a range of approximately 18.4 MHz to approximately 19.6 MHz, and the frequency deviation is generally increased with the passage of time.

However, as shown in FIG. 14B, the battery pack with a reinforcement layer according to the present invention basically has a frequency deviation of transmitted and received signals in a range of approximately 16.6 MHz to approximately 17.2 MHz, and the frequency deviation is not generally increased with the passage of time.

The transmitted and received signals of the film antenna may have slightly different frequency ranges (frequency deviations) depending on the model or design of a mobile communication terminal employing a battery pack. In general, the smaller the frequency range of transmitted and received signals in a battery pack, the more easily the transmitted and received signals are processed with internationally authorized RFID frequency bands. In addition, as described above, when the reinforcement layer of the antenna module according to the present invention is employed to the battery pack, the frequency deviation by product is in a range of approximately 0.6 MHz to approximately 1 MHz, which is smaller than that of the conventional antenna module. Therefore, according to embodiments of the present invention, quality and reliability of a transmitted/received signal by product are increased.

As described above, in the battery pack according to embodiments of the present invention, the reinforcement layer further provided between a film antenna and a battery cell may prevent or substantially prevent external deformation of the film antenna even if adhesive properties of a second adhesive layer and a label are reduced, thereby providing the battery pack capable of maintaining an excellent NFC function with a relatively small frequency deviation.

As described above, embodiments of the invention provide a battery pack comprising: a battery cell; a ferrite layer at a side surface of the battery cell; a film antenna at a side surface of the ferrite layer; and a reinforcement layer between the battery cell and the ferrite layer. The ferrite layer can be between the film antenna and the reinforcement layer.

In some embodiments, the battery pack comprises a battery cell, a reinforcement layer adjacent a side surface of the battery cell, a ferrite layer adjacent a side surface of the reinforcement layer, and a film antenna adjacent a side surface of the ferrite layer. Although the battery pack with an antenna according to exemplary embodiments of the present invention have been described in detail hereinabove, it should be understood that many variations and modifications of the basic inventive concept herein described, which may appear to those skilled in the art, will still fall within the scope of the exemplary embodiments of the present invention as defined by the appended claims, and their equivalents.

## Claims

1. A battery pack comprising:
a battery cell;
a ferrite layer arranged adjacent a side surface of the battery cell;
a film antenna arranged adjacent a side surface of the ferrite layer; and
a reinforcement layer arranged between the battery cell and the ferrite layer.

2. The battery pack of claim 1, wherein the reinforcement layer comprises copper, aluminum, or stainless steel.

3. The battery pack of claim 1 or 2, wherein the reinforcement layer is adhered to the ferrite layer through an adhesive layer.

4. The battery pack of claim 1 or 2, wherein the reinforcement layer is directly formed on the ferrite layer by plating, coating, sputtering, or vacuum depositing.

5. The battery pack of any one of claims 1 to 4, wherein the reinforcement layer has a thickness in a range of 0.1 µm to 2.0 µm.

6. The battery pack of any one of claims 1 to 5, wherein the reinforcement layer comprises two layers and an adhesive layer is between the two layers.

7. The battery pack of any one of claims 1 to 6, further comprising an adhesive layer arranged between the battery cell and the reinforcement layer.

8. The battery pack of any one of claims 1 to 7, wherein the battery cell further comprises a recessed portion configured to receive the reinforcement layer.

9. The battery pack of any one of claims 1 to 8, wherein the reinforcement layer has a planar shape or comprises a planar mesh network.

10. The battery pack of any one of claims 1 to 9, wherein the reinforcement layer comprises a plurality of segments.

11. The battery pack of any one of claims 1 to 10, wherein transmitted and received signals of the film antenna have frequencies in a range of 16 MHz to 22 MHz, optionally wherein transmitted and received signals of the film antenna have frequencies in a range of 16.6 MHz to 17.2 MHz.

12. The battery pack of any one of claims 1 to 11, further comprising a label wrapping the film antenna.

13. The battery pack of claim 12, wherein the label is directly adhered to the film antenna.

14. The battery pack of claim 12, wherein the label is separated from the film antenna.

15. The battery pack of any one of claims 1 to 14, wherein the battery cell comprises a prismatic battery or a pouch-type battery.
